**Europäisches Patentamt**

**European Patent Office**

**Office européen des brevets**

(11) Veröffentlichungsnummer : **0 101 604**
**B1**

(12) **EUROPÄISCHE PATENTSCHRIFT**

(45) Veröffentlichungstag der Patentschrift :
12.11.86

(51) Int. Cl.⁴ : **F 16 H 21/04, B 62 D 55/08**

(21) Anmeldenummer : **83108076.7**

(22) Anmeldetag : **16.08.83**

(54) **Getriebe.**

(30) Priorität : **25.08.82 DE 3231477**

(43) Veröffentlichungstag der Anmeldung :
**29.02.84 Patentblatt 84/09**

(45) Bekanntmachung des Hinweises auf die Patenterteilung : **12.11.86 Patentblatt 86/46**

(84) Benannte Vertragsstaaten :
**AT CH FR GB IT LI SE**

(56) Entgegenhaltungen :
**CH-A- 228 800**
**CH-A- 377 166**
**DE-A- 2 354 712**
**DE-A- 2 523 619**
**DE-B- 1 208 635**
**DE-B- 2 460 819**
**GB-A- 277 062**
**GB-A- 1 105 349**
**US-A- 3 012 443**
**LUEGERS LEXIKON DER GESAMTEN TECHNIK, 1926, "Cardanische Kreise"**

(73) Patentinhaber : **Seeber, Fritz**

**D-6731 Elmstein-Helmbach (DE)**

(72) Erfinder : **Seeber, Fritz**

**D-6731 Elmstein-Helmbach (DE)**

(74) Vertreter : **Möll, Friedrich Wilhelm**
**Patentanwälte Dipl.-Ing. F. W. Möll Dipl.-Ing. H. Ch. Bitterich Langstrasse 5 Postfach 2080**
**D-6740 Landau/Pfalz (DE)**

EP 0 101 604 B1

**Beschreibung**

Die Erfindung betrifft ein Getriebe zum Umwandeln einer Drehbewegung in eine lineare Bewegung und eine spezielle Anwendungsmöglichkeit desselben.

In der Technik besteht häufig der Wunsch, eine Kreisbewegung bzw. eine auf einem Kreisbogenabschnitt verlaufende Bewegung in eine Linearbewegung umzusetzen. Grundlage für die Ausbildung entsprechender Getriebe für eine solche Bewegungsumsetzung sind die sogenannten Cardanischen Kreise, die eine hypozykloidische Geradführung ermöglichen. Diese bekannte Linearbewegung geht jedoch immer durch den Mittelpunkt des größeren Kreises der genannten Cardanischen Kreise (Luegers Lexikon der gesamten Technik, 1926, Stichwort « Cardanische Kreise »).

Der Erfindung liegt die Aufgabe zugrunde, ein Getriebe zu finden, mit dem eine Kreisbogenbewegung in eine lineare Hubbewegung in beliebigem Abstand von diesem Mittelpunkt umgewandelt werden kann.

Diese Aufgabe wird gelöst durch die kennzeichnenden Merkmale des Patentanspruchs 1.

Die absoluten Werte der einzelnen Parameter des Getriebes, die zur Erzielung einer geradlinigen Bewegung des Exzenterpunktes führen, lassen sich je nach den Anwendungsgegebenheiten, insbesondere den konstruktiv vorgegebenen Größen und Abständen bestimmen. Der besondere Vorteil liegt darin, daß alle Lager als Drehlager ausgebildet werden können ; Schiebelager sind nicht erforderlich.

Das Antriebsmittel kann in einfacher Weise ein Band oder ein Seil sein.

Es kann auch ein Zahnriemen oder eine Kette sein, wobei dann die Exzenterscheibe als Zahnrad bzw. Kettenrad ausgebildet sein müßte.

Schließlich ist es auch möglich, als Antriebsmittel eine Zahnstange zu verwenden. Hier müßten dann sowohl die Exzenterscheibe als auch die Steuerscheibe mit gezahnter Peripherie ausgebildet sein. Eine Zahnstange als Antriebsmittel hat insbesondere den Vorteil, daß sie nicht nur auf Zug, sondern auch auf Druck beansprucht werden kann.

Die vorbeschriebene einfache Grundform des Getriebes kann weitergebildet werden. Eine erste Weiterbildung ist eine spiegelbildliche und symmetrische Verdoppelung von Steuer- und Exzenterscheibe. Bei einer zweiten Weiterbildung werden die einander zugeordneten Scheiben — Steuerscheiben bzw. Exzenterscheiben — in der Größe unterschiedlich ausgeführt.

In der technischen Anwendung wird darüber hinaus in aller Regel ein Doppelgetriebe mit zwei Schwingen und entsprechenden weiteren Getriebegliedern eingesetzt werden, wobei je eine Steuerscheibe mit einer Schwinge fest verbunden ist und jeweils die Exzenterscheibe der gegenüberliegenden Schwinge antreibt. Das Übersetzungsverhältnis Steuerscheibe-Exzenterscheibe halbiert sich dabei. Bei diesem Doppelgetriebe haben die Exzenterpunkte einen konstanten Abstand voneinander. Bei symmetrischer Bewegung der beiden Schwingen führen die Exzenterpunkte parallele Hubbewegungen aus. Bewegt sich nur eine Schwinge, führt der eine Exzenterpunkt eine kreisförmige Bewegung um den anderen Exzenterpunkt aus. Selbstverständlich sind auch beliebige Zwischenstellungen der beiden Schwingen möglich.

Die beiden Exzenterpunkte können nun über je ein Drehlager mit einem starren Träger verbunden werden, da sie, unabhängig von der Schwingenstellung, immer einen konstanten Abstand voneinander haben. Die Bewegungen der Schwingen können beliebig symmetrisch oder unsymmetrisch verlaufen, nach oben und nach unten.

Eine technische Anwendung des Doppelgetriebes ergibt sich beispiels- und vorzugsweise bei einem geländegängigen Fahrzeug.

Dieses kann als Gleiskettenfahrzeug ausgebildet sein, es kann aber auch mit einer Mehrzahl von Rädern auf jeder Seite ausgestattet sein. Um den Rädern auf beiden Seiten beliebgige Bewegungen zu ermöglichen, zum einen die Verschiebung in der senkrechten Ebene, zum anderen aber auch zur Verschwenkung der jeweiligen seitlichen Radanordnungen um deren Mitte, kann das neue Getriebe mit Vorteil eingesetzt werden.

Ein derartiges Fahrzeug weist zwei seitlich angeordnete sich in Längsrichtung erstreckende starre Träger als Kettenträger bzw. Radträger auf, die in ihren beiden Endbereichen mit Verbindungsbolzen ausgestattet sind, die an den Exzenterpunkten zweier Exzenterscheiben drehbar gelagert sind, die ihrerseits um an den freien Enden zweier Schwingen drehbar gelagerte Zapfen schwenkbar sind. Die beiden anderen Enden der Schwingen schwenken zusammen mit mit den Schwingen verbundenen Steuerscheiben um einen am Fahrzeugchassis festgelegten Zentralbolzen. Die Exzenterscheibe der einen Schwinge ist über ein Antriebsmittel jeweils mit der Steuerscheibe der anderen Schwinge verbunden. An den Schwingen greifen die Kolbenstangen von Hydraulikzylindern einer Hydrauliksteuerung an. Die Hydraulikzylinder sind ebenfalls am Fahrzeugchassis schwenkbar festgelegt.

Drehen sich die Schwingen mit den Steuerscheiben um den Zentralbolzen, führen die Exzenterpunkte der Exzenterscheiben bzw. die Verbindungsbolzen Bewegungen aus, wobei der Abstand zwischen den Verbindungsbolzen immer konstant bleibt. Die beiden seitlichen Radanordnungen können in einem sehr großen Bereich unabhängig voneinander nach oben oder nach unten verschoben und geschwenkt werden, ohne daß sich der Abstand der Radachsen gegeneinander verändert.

Weitere Merkmale der Erfindung und Einzelheiten der durch dieselbe erzielten Vorteile ergeben sich aus der nachfolgenden Beschreibung der in den beigefügten Zeichnungen dargestellten Anordnung

2

sowie einer Reihe von Prinzipskizzen des erfindungsgemäßen Getriebes. Es zeigen :

Figur 1 eine Anwendung eines Doppelgetriebes bei einem Kettenfahrzeug,

Figur 2a eine schematische Darstellung des Doppelgetriebes der Fig. 1 in Grundstellung,

Figur 2b eine schematische Darstellung des Doppelgetriebes der Fig. 1 bei symmetrischem Schwenken der Schwingen,

Figur 2c eine schematische Darstellung des Doppelgetriebes der Fig. 1 bei unsymmetrischem Schwenken der Schwingen,

Figur 3 eine schematische Darstellung eines einfachen Getriebes in seiner einfachsten Ausführungsform,

Figur 4 eine schematische Darstellung des einfachen Getriebes der Fig. 3 bei einer spiegelbildlichen und symmetrischen Verdoppelung von Steuer- und Exzenterscheibe,

Figur 5 eine schematische Darstellung des Getriebes der Fig. 3 bei einer unsymmetrischen Verdoppelung von Steuerscheibe und Exzenterscheibe und

Figur 6 eine schematische Erläuterung für die zeichnerische Ermittlung der Abmessungen von Steuerscheibe und Exzenterscheibe in Abhängigkeit von Schwingenlänge und Exzenterlänge.

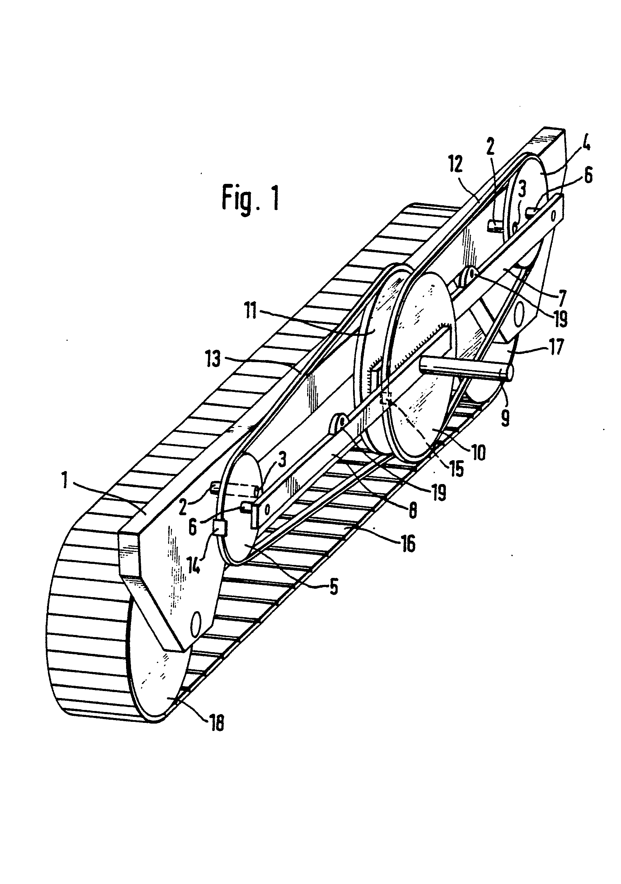

An erster Stelle wird die Kettenanordnung des erläuterten Fahrzeuges beschrieben, weil an dieser Aufbau und Wirkungsweise des neuen Getriebes am besten dargestellt werden können. Dieses Fahrzeug ist im einzelnen nicht näher wiedergegeben. Es besitzt an beiden Seiten seines Chassis die in Fig. 1 dargestellte Anordnung.

Ein starrer Träger 1 trägt die Kettenräder 17, 18. Dieser Träger 1 mit der Kette 16 bzw. den Rädern.17, 18 muß sich in senkrechter Ebene weit bis unter die Fahrzeugunterseite senken, über die Fahrzeugoberseite heben und um die Querachse des Fahrzeugs verschwenken lassen können. Dies ist Voraussetzung für die geforderte extreme Geländegängigkeit des Fahrzeuges.

In den beiden Endbereichen des Trägers 1 sind Verbindungsbolzen 2 vorgesehen, die in exzentrisch angeordneten Bohrungen 3 in zwei Exzenterscheiben 4, 5 eingreifen. Die Exzenterscheiben 4, 5 sind ihrerseits um Bolzen 6 an den äußeren Enden zweier Schwingen 7 und 8 schwenkbar. Die inneren Enden der beiden Schwingen 7 und 8 sind um einem Zentralbolzen 9 schwenkbar und mit je einer Steuerscheibe 10 bzw. 11 fest verbunden, die ebenfalls um den Zentralbolzen 9 drehbar sind. Die Exzenterscheiben 4 und 5 sind mit den Steuerscheiben 10 und 11 wechselweise, also 10 mit 4 und 11 mit 5, durch Hülltriebe 12 und 13 verbunden, die zum Beispiel als Seile, Ketten oder Bänder ausgebildet sein können. Die Hülltriebe 12 und 13 sind an den Exzenterscheiben 4, 5 bei 14 und an den Steuerscheiben 10, 11 bei 15 befestigt. Wegen der besseren Übersichtlichkeit sind die Befestigungspunkte 14, 15 nur an der Exzenterscheibe 5 und der Steuerscheibe 10 wiedergegeben. Sie befinden sich an der Exzenterscheibe 4 und der Steuerscheibe 11 an den entsprechenden Stellen.

Bei dem dargestellten Beispiel ist eine Laufkette 16 vorgesehen mit zwei Antriebs- und Umlenkrädern 17 und 18. Ebenso kann aber der Träger 1 auch mit einer Mehrzahl, vorzugsweise drei, Rädern ausgestattet sein.

An den beiden Schwingen 7 und 8 sind Befestigungspunkte 19 für die Kolbenstangen zweier hydraulischer Zylinder 20 und 21 vorgesehen, die ebenso wie der Zentralbolzen 9 am Fahrzeugchassis befestigt sind und Teil der Hydraulik zum Verstellen und Verschwenken der Räder bzw. Ketten sind.

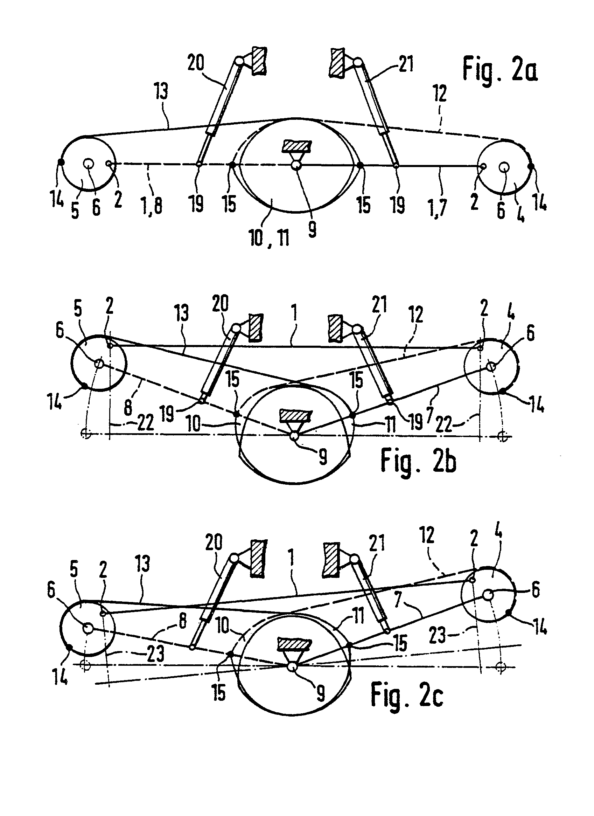

Die Fig. 2a-c zeigen drei herausgegriffene typische Lagen der einzelnen Getriebeteile bei dem Doppelgetriebe der Fig. 1 Zunächst ist in Fig. 2a das Getriebe in horizontaler Grundstellung dargestellt. Die beiden Schwingen 7 und 8 sind geradlinig ausgerichtet. Drehen sich nun die beiden Schwingen 7, 8 symmetrisch, wie in Fig. 2b, nach oben, bedingt durch Veränderungen der Kolben in den Hydraulikzylindern 21 und 20, dann drehen sich auch die Steuerscheiben 10 und 11 entsprechend um den Zentralbolzen 9. Über die Hülltriebe 12, 13 werden die Exzenterscheiben, 4, 5 um die Bolzen 6 verdreht. Die Exzenterpunkte 3 und mit diesen die Verbindungsbolzen 2 führen geradlinige parallele Bewegungen durch. Drehen sich die beiden Schwingen 7, 8 unsymmetrisch, wie in Fig. 2c, nach oben, führen die Exzenterpunkte kompliziertere Bahnenkurven aus. So beschreibt beispielsweise der Exzenterpunkt 3 der rechten Exzenterscheibe 4 eine kreisförmige Bewegung um den Exzenterpunkt 3 der linken Exzenterscheibe 5, wobei dieser kreisförmigen Bewegung eine lineare Bewegung überlagert ist. Entsprechendes gilt auch für die Bewegung der Exzenterpunkte 3 der linken Exzenterscheibe 5 in Bezug auf den Exzenterpunkt 3 der rechten Exzenterscheibe 4. Überraschenderweise ist jedoch auch bei unsymmetrischem Schwenken der Abstand zwischen den Exzenterpunkten 3 der beiden Exzenterscheiben 4, 5 konstant, so daß die Exzenterpunkte 3 bzw. die Verbindungsbolzen 2 mit einem starren Träger verbunden werden können. Bei dieser Ausbildung mit einseitigem Hülltrieb 12, 13 muß selbstverständlich eine Rückstellmöglichkeit gegeben sein, zum Beispiel durch die Schwerkraft oder auch durch eine Feder (nicht dargestellt).

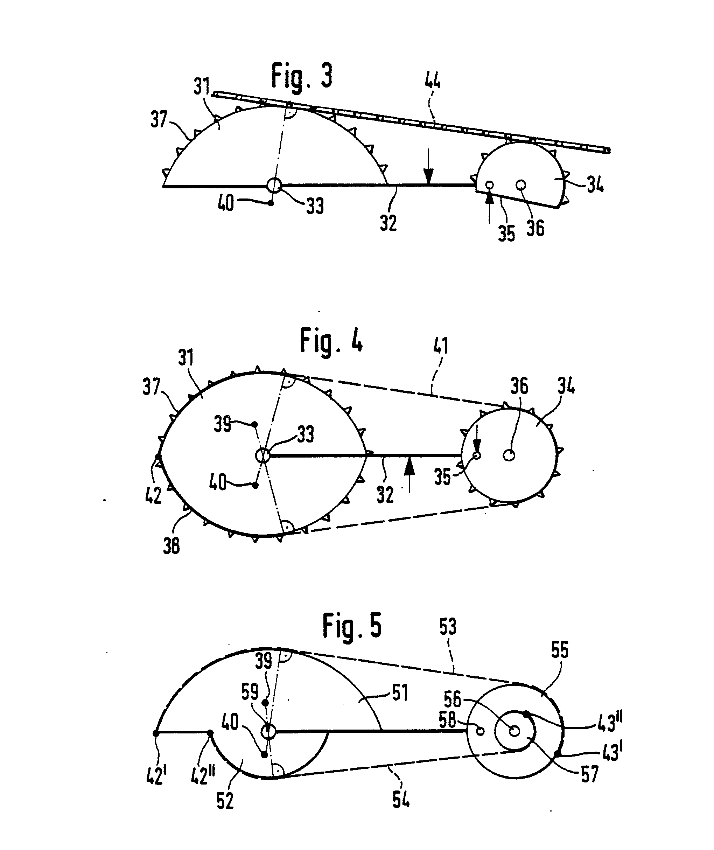

Fig. 3 zeigt die einfachste Ausführungsform des erfindungsgemäßen Getriebes. Hier ist eine feste Steuerscheibe 31 mit gezahnter Außenkontur 37 vorgesehen sowie eine ebenfalls gezahnte Exzenterscheibe 34 mit einer exzentrischen Bohrung 35, die um eine Schwenkachse 36 am freien Ende einer Schwinge 32 drehbar ist. Über eine Zahnstange 44 sind Steuerscheibe 31 und Exzenterscheibe 34 verbunden.

Nach Fig. 4 ist der Umfang der Steuerscheibe 31 aus zwei gezahnten Kreisabschnitten 37 und 38 gebildet, deren Mittelpunkte bei 39 und 40, also nicht im Drehpunkt 33 der Schwinge 32, liegen. Bei dieser Ausführungsform handelt es sich um eine spiegelbildliche, symmetrische Verdoppelung von Steuerscheibe und Exzenterscheibe. Man erkennt hier auch, daß der Drehpunkt 33 der Schwinge 32 auf den geraden Verbindungslinien zwischen den Krümmungsmittelpunkten 39, 40 und dem Punkt liegt, wo sich der Hülltrieb 41 von der Steuerscheibe 31 löst, und daß diese Verbindungslinien und der Hülltrieb einen rechten Winkel einschließen.

Beide Hälften der Scheiben 31 und 34 sind mit einer Kette 41 verbunden. Der Festlegungspunkt für die Kette 41 an der Scheibe 31 ist bei 42 angedeutet.

Eine weitere Ausführungsform des Getriebes, bei welchem die Steuerscheiben nicht symmetrisch sind, sondern die untere Steuerscheibe kleiner gehalten ist, ist in Fig. 5 dargestellt. Dies kann zum Beispiel beim Einsatz in einem Fahrzeug von Bedeutung sein, wenn eine Entsprechend größere Bodenfreiheit erforderlich wird.

Die obere Hälfte 51 und die untere Hälfte 52 der Steuerscheibe haben unterschiedliche Radien. Auch die Exzenterscheibe besitzt einen Teil 55 mit einem großen Radius und einen Teil 57 mit einem kleinen Radius. Die Scheiben 51, 55 mit großen Radius sind über einen Hülltrieb 53, die Scheiben 52, 57 über einen Hülltrieb 54 verbunden. Die Steuerscheiben 51, 52 drehen sich um einen Drehpunkt 59, die Exzenterscheiben 55, 57 um einen Drehpunkt 56. Mit 58 ist der Exzenterpunkt bezeichnet. Als Hülltriebe 53, 54 werden hier Bänder oder Seile verwendet, deren Festlegungspunkte mit 42′, 42″ und 43′, 43″ bezeichnet sind.

Bei den geschilderten Anwendungsbeispielen der Fig. 1 und 2a-c stellen die Hülltriebe durch ihre wechselseitige Befestigung die Exzenterscheiben und mit der Steuerscheibe der jeweils anderen Schwinge gekoppelt eine kraftschlüssige Verbindung zwischen den ansonsten frei um den Zentralbolzen schwenkbaren Schwingen her. Durch die besondere Gestaltung der Steuerscheiben ändert sich der Abstand zwischen den Verbindungsbolzen bei beliebigen Schwingenstellungen nicht, was Voraussetzung dafür ist, daß sie fest an der Schiene befestigt werden können. Bei symmetrischem Schwenken beider Schwingen bewegen sich die Verbindungsbolzen geradlinig. Diese geradlinige Bewegung ist zwar mathematisch nicht exakt, die Abweichungen liegen aber weit unterhalb der bei technischen Konstruktionen gegebenen Toleranzen.

Für die Praxis kann also guten Gewissens von einer geradlinigen Bewegung gesprochen werden, zumal durch kleine Korrekturen der Konturen von Steuer- und/oder Exzenterscheibe diese Toleranzen noch weiter verringert werden können.

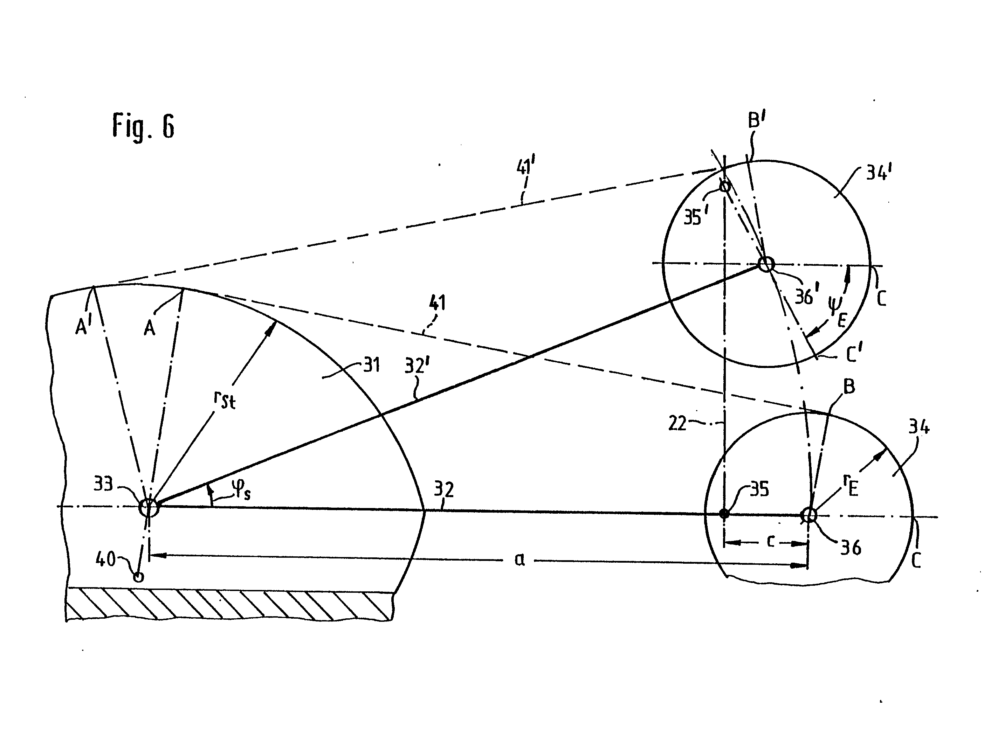

Unter der Voraussetzung, daß die Konturen von Steuerscheibe und Exzenterscheibe kreisförmig sind, können die Abmessungen der Scheiben zeichnerisch ermittelt werden. Dies soll anhand der Fig. 6 demonstriert werden.

In Fig. 6 erkennt man in Anlehnung an Fig. 3 eine Steuerscheibe 31, die ortsfest sein soll. Man erkennt ferner eine Schwinge 32, die um den Mittelpunkt 33 der Steuerscheibe 31 schwenkbar ist. Am Ende der Schwinge 32 ist eine Exzenterscheibe 34 um ihren Mittelpunkt 36 drehbar gelagert. Die Mittelpunkte 33, 36 von Steuerscheibe 31 bzw. Exzenterscheibe 34 haben einen gegenseitigen Abstand a.

Auf der Exzenterscheibe 34 befindet sich der Exzenterpunkt 35 in einem Abstand c vom Mittelpunkt 36. Steuerscheibe 31 und Exzenterscheibe 34 sind über einen Hülltrieb 41 miteinander gekoppelt.

Fig. 6 zeigt weiterhin eine Schwinge 32′, die gegenüber der Grundstellung um den Winkel $\varphi_S$ nach oben verschwenkt ist. Am Ende der Schwinge 32′ befindet sich die Exzenterscheibe 34′, die um ihren Mittelpunkt 36′ eine Drehung um den Winkel $\psi_E$ ausgeführt hat.

Der Exzenterpunkt 35′ ist gegenüber der Grundstellung 35 ebenfalls um den Winkel $\psi_E$ verdreht. Beim Drehen läuft er jedoch auf der Bahnkurve 22, die senkrecht auf der Grundlinie der Schwinge 32 steht.

Der Hülltrieb 41 verläßt die Scheiben 31, 34 bei jedem beliebigen Winkel $\varphi_S$ der Schwinge 32 tangential, was bei der Steuerscheibe 31 mit den Punkten A bzw. A′ und bei Exzenterscheibe mit den Punkten B bzw. B′ dargestellt ist.

Unter der Voraussetzung, daß die Abstände a und c, gegebenenfalls auch der Radius $r_E$ der Exzenterscheibe 34, vorgegeben sind, kann der Radius $r_{St}$ der Steuerscheibe 31 konstruiert werden. Man muß lediglich dafür sorgen, daß der Kreisbogen C-C′, der der Drehung der Exzenterscheibe 34′ um den Winkel $\varphi_E$ entspricht, gleich dem Kreisbogen A-A′, der der Drehung der Schwinge 32′ um den Winkel $\varphi_S$ entspricht, wird.

Mathematisch läßt sich der Radius $r_{St}$ der Steuerscheibe 31 auch durch folgende Differentialgleichung ausdrücken:

$$r_{St} = \frac{r_E}{2} \cdot \frac{d\psi_E}{d\varphi_S}$$

Die Lösung dieser Differentialgleichung führt zu folgender Gleichung:

$$r_{St} = \frac{1}{2}\left(C + \frac{a \cdot c \sin \varphi_S}{\sqrt{c^2 - ((a-c) - a \cos \varphi_S)^2}}\right)$$

4

**Patentansprüche**

1. Getriebe zum Umwandeln einer Drehbewegung in eine lineare Bewegung, dadurch gekennzeichnet, daß eine um eine Schwenkachse (9 ; 33 ; 59) schwenkbare Schwinge (7, 8 ; 32) vorgesehen ist, daß am freien Ende der Schwinge (7, 8 ; 32) eine Exzenterscheibe (4, 5 ; 34 ; 55, 57) mit einem Exzenterpunkt (2 ; 35 ; 58), der zur Erzeugung der Linearbewegung dient, und einer Kreisperipherie im wirksamen Umfangsbereich zentrisch und drehbar gelagert ist, daß eine relativ zu Schwinge (7, 8 ; 32) und Exzenterscheibe (4, 5 ; 34 ; 55, 57) feststehende Steuerscheibe (10, 11 ; 31 ; 51, 52) mit Kreisbogenabschnittsperipherie vorgesehen ist, daß Exzenter- und Steuerscheibe über ein Zug- bzw. Schubmittel (12, 13 ; 41 ; 44 ; 44 ; 53) verbunden sind und daß die Schwenkachse (9 ; 33 ; 59) auf einer geraden Verbindungslinie zwischen dem Krümmungsmittelpunkt (39, 40) der Kreisbogenabschnittsperipherie der Steuerscheibe (10, 11 ; 31 ; 51, 52) und dem Ablösepunkt (A) des Zug- bzw. Schubmittels (12, 13 ; 41 ; 44 ; 53) von der Peripherie der Steuerscheibe bei Nullstellung der Exzenterscheibe (4, 5 ; 34 ; 55, 57) liegt, abhängig vom Längenverhältnis (c/a) zwischen Exzenterabstand (c) und Schwingenlänge (a).

2. Getriebe nach Anspruch 1, dadurch gekennzeichnet, daß das Antriebsmittel (12, 13) als Band oder Seil ausgebildet ist.

3. Getriebe nach Anspruch 1, dadurch gekennzeichnet, daß das Antriebsmittel als Zahnriemen und die Exzenterscheibe entsprechend als Zahnrad ausgebildet ist.

4. Getriebe nach Anspruch 1, dadurch gekennzeichnet, daß das Antriebsmittel als Kette und die Exzenterscheibe entsprechend als Kettenrad ausgebildet ist.

5. Getriebe nach Anspruch 1, dadurch gekennzeichnet, daß das Antriebsmittel als Zahnstange ausgebildet ist und die Steuerscheibe, wie auch die Exzenterscheibe, mit entsprechend gezahnter Peripherie ausgebildet sind.

6. Getriebe nach Anspruch 1 bis 5, dadurch gekennzeichnet, daß Steuer- und Exzenterscheibe (10, 11 ; 4, 5) spiegelbildlich symmetrisch verdoppelt sind.

7. Getriebe nach Anspruch 1 bis 5, dadurch gekennzeichnet, daß dessen Scheiben dergestalt verdoppelt sind, daß die einander zugeordneten Scheiben (51, 52 ; 55, 57) in der Größe unterschiedlich sind.

8. Getriebe nach Anspruch 1 bis 7, dadurch gekennzeichnet, daß es als Doppelgetriebe mit zwei Schwingen (7, 8) und entsprechenden weiteren Getriebegliedern ausgebildet ist, wobei je eine Steuerscheibe (10, 11) mit einer Schwinge (7, 8) fest verbunden ist und jeweils die Exzenterscheibe (4, 5) der gegenüberliegenden Schwinge (8, 7) antreibt.

9. Anwendung des Getriebes nach Anspruch 8 an einem geländegängigen Fahrzeug, dadurch gekennzeichnet, daß es mit einem seitlich am Fahrzeug angeordneten, sich in Längsrichtung erstreckenden als Ketten- bzw. Radträger dienenden starren Träger (1) dergestalt in Verbindung steht, daß in den beiden Endbereichen der Schiene (1) angeordnete Verbindungsbolzen (2) in die Exzenterpunkte (3) der beiden Exzenterscheiben (4, 5) eingreifen, die ihrerseits um an den äußeren Enden der beiden Schwingen (7, 8) gelagerte Zapfen (6) drehbar sind, daß die beiden inneren Enden der Schwingen (7, 8) zusammen mit ihnen verbundenen Steuerscheiben (10, 11) um einen am Fahrzeugchassis befestigten Zentralbolzen (9) schwenken, daß an den Schwingen (7, 8) Kolbenstangen von in Hydraulikzylindern einer Hydrauliksteuerung bewegten Kolben angreifen, die ebenfalls am Fahrzeugchassis schwenkbar befestigt sind, und daß schließlich die Exzenterscheibe (4 ; 5) der einen Schwinge (7 ; 8) über ein Antriebsmittel (12 ; 13) jeweils mit der Steuerscheibe (10 ; 11) der anderen Schwinge (8 ; 7) verbunden ist.

**Claims**

1. A transmission for converting rotating motion into linear motion, characterised in that a link arm (7, 8 ; 32) is provided which is pivotable about a pivot axis (9 ; 33 ; 59), in that at the free end of the link arm (7, 8 ; 32) there is mounted centrally and rotatably an eccentric disc (4, 5 ; 34 ; 55, 57) with an eccentric point (2 ; 35 ; 58), which serves to generate linear motion, and with a circular periphery in the effective peripheral zone, in that a control disc (10, 11 ; 31 ; 51, 52) stationary relative to the link arm (7, 8 ; 32) and the eccentric disc (4, 5 ; 34 ; 55, 57) is provided with a periphery having a circular arc segment, in that the eccentric disc and control disc are connected via a tension and or thrust means (12, 13 ; 41 ; 44 ; 53) and in that the pivot axis (9 ; 33 ; 59) lies on a straight connecting line between the centre of curvature (39, 40) of the peripheral circular arc segment of the control disc (10, 11 ; 31 ; 51, 52) and the separation point (A) of the tension and/or thrust means (12, 13 ; 41 ; 44 ; 53) from the periphery of the control disc in the neutral position of the eccentric disc (4, 5 ; 34 ; 55, 57), depending on the length ratio (c/a) between the eccentric distance (c) and the link arm length (a).

2. A transmission according to Claim 1, characterised in that the drive means (12, 13) takes the form of a belt or cable.

3. A transmission according to Claim 1, characterised in that the drive means takes the form of a toothed belt and the eccentric disc correspondingly takes the form of a toothed wheel.

5

**0 101 604**

4. A transmission according to Claim 1, characterised in that the drive means takes the form of a chain and the eccentric disc correspondingly takes the form of a sprocket wheel.

5. A transmission according to Claim 1, characterised in that the drive means takes the form of a rack and the control disc, like the eccentric disc, has a correspondingly toothed periphery.

6. A transmission according to Claims 1 to 5, characterised in that the control disc and eccentric disc (10, 11 ; 4, 5) are symmetrically duplicated in mirror image fashion.

7. A transmission according to Claims 1 to 5, characterised in that its discs are duplicated in a manner in which the discs (51, 52 ; 55, 57) associated with one another are of different size.

8. A transmission according to Claims 1 to 7, characterised in that it is a double transmission with two link arms (7, 8) and corresponding other transmission members, wherein each control disc (10, 11) is securely connected to a link arm (7, 8) and drives respectively eccentric disc (4, 5) of the opposed link arm (8, 7).

9. Application of the transmission according to Claim 8 to a cross-country vehicle, characterised in that it is connected with a rigid support beam (1), which ist mounted laterally on the vehicle, extending in longitudinal direction and serving as a chain or wheel support, so that connecting pins (2) disposed in the two end zones of the beam (1) engage in the eccentric points (3) of the two eccentric discs (4, 5) which themselves are rotatable about studs (6) mounted on the outer ends of the two link arms (7, 8), in that the two inner ends of the link arms (7, 8), together with the control discs (10, 11) connected to them, pivot about a central shaft (9) secured to the vehicle chassis, in that the link arms (7, 8) are engaged by piston rods of pistons which move in hydraulic cylinders of a hydraulic control system and which are likewise pivotably mounted on the vehicle chassis, and finally in that the eccentric disc (4 ; 5) of one link arm (7, 8) is connected *via* a drive means (12 ; 13) respectively to the control disc (10 ; 11) of the other link arm (8 ; 7).

## Revendications

1. Mécanisme pour transformer un mouvement de rotation en un mouvement linéaire, caractérisé en ce qu'on prévoit une bielle (7, 8 ; 32) pouvant pivoter autour d'un axe de pivotement (9, 33 ; 59), un disque excentrique (4, 5 ; 34 ; 55, 57) comportant un point excentrique (2 ; 35 ; 58) qui est monté à l'extrémité libre de la bielle (7, 8 ; 32), le point excentrique servant à la réalisation d'un mouvement linéaire et étant monté de façon rotative au centre d'une périphérie du cercle dans une région effective du pourtour, un disque de commande (10, 11 ; 31 ; 51, 52) fixe par rapport à la bielle (7, 8 ; 32) et au disque excentrique (4, 5 ; 34 ; 55, 57) étant muni d'une périphérie en section d'arc de cercle, les disques excentriques et de commande étant reliés par l'intermédiaire d'un moyen de traction ou de poussée (12, 13 ; 41, 44 ; 53) et l'axe de pivotement (9 ; 33 ; 59) étant situé sur une ligne de liaison rectiligne entre le centre de courbure (39, 40) de la périphérie de la section en arc de cercle du disque de commande (10, 11 ; 31 ; 51, 52) et le point de séparation (A) du moyen de traction ou de poussée (12, 13 ; 41 ; 44 ; 53) à la périphérie du disque de commande dans la position neutre du disque excentrique (4, 5 ; 34 ; 55, 57) en fonction du rapport entre les longueurs (c/a) représentant la distance (c) de l'excentrique et la longueur (a) de la bielle.

2. Mécanisme selon la revendication 1, caractérisé en ce que le moyen d'entraînement (12, 13) est constitué sous forme d'une courroie ou d'un câble.

3. Mécanisme selon la revendication 1, caractérisé en ce que le moyen d'entraînement est constitué sous forme d'une courroie dentée et le disque excentrique sous forme d'une roue dentée correspondante.

4. Mécanisme selon la revendication 1, caractérisé en ce que le moyen d'entraînement est constitué sous forme d'une chaîne et le disque excentrique sous forme d'une roue à chaîne correspondante.

5. Mécanisme selon la revendication 1, caractérisé en ce que le moyen d'entraînement est constitué sous forme d'une crémaillère et le disque de commande, ainsi que le disque excentrique, comporte une périphérie dentée correspondante.

6. Mécanisme selon l'une des revendications 1 à 5, caractérisé en ce que les disques de commande et excentriques (10, 11 ; 4, 5) sont doublés de façon symétrique et inversée.

7. Mécanisme selon l'une des revendications 1 à 5, caractérisé en ce que ces disques sont doublés de manière que les disques associés les uns aux autres (51, 52 ; 55, 57) aient des dimensions différentes.

8. Mécanisme selon l'une des revendications 1 à 7, caractérisé en ce qu'il est constitué sous forme d'un mécanisme double à deux bielles (7, 8) avec d'autres organes correspondants, chaque disque de commande (10, 11) étant relié fermement à une bielle (7, 8) et entraînant respectivement le disque excentrique (4, 5) de la bielle opposée (8, 7).

9. Utilisation du mécanisme selon la revendication 8 dans un véhicule tout-terrain, caractérisé en ce qu'il est en liaison avec une barre rigide (1) montée latéralement sur le véhicule, s'étendant en direction longitudinale et servant de support pour des chenilles ou des roues, de manière que des tourillons de liaison (2) disposés dans les deux régions d'extrémités de la barre (1) pénètrent dans les points excentriques (3) des deux disques excentriques (4, 5) qui peuvent tourner, de leur côté, autour de tourillons (6) montés sur les extrémités extérieures des deux bielles (7, 8), en ce que les deux extrémités intérieures des bielles (7, 8) pivotent ensemble avec les disques de commande (10, 11) qui leur sont reliés autour d'un tourillon central (9) fixé au châssis du véhicule, en ce que les tiges de pistons déplacés dans des vérins hydrauliques d'un système de commande hydraulique coopèrent avec les bielles (7, 8), ces pistons étant également fixés de façon pivotante au châssis du véhicule, et en ce que finalement les disques excentriques (4, 5) de l'une des bielles (5, 8) sont respectivement reliés par l'intermédiaire d'un moyen d'entraînement (12, 13) avec le disque de commande (10, 11) de l'autre bielle (8 ; 7).

Fig. 1

Fig. 2a

Fig. 2b

Fig. 2c

Fig. 3

Fig. 4

Fig. 5

Fig. 6

0 101 604